# EUROPEAN PATENT APPLICATION

(11) **EP 3 398 700 A1**
(43) Date of publication of application: **07.11.2018**
(21) Application number: 16881386.3
(22) Date of filing: 30.12.2016
(51) Int. Cl.: B22F 1/00, B22F 9/18, B22F 9/24

(54) **METHOD FOR PRODUCING COPPER NANOPARTICLES AND USE OF SAID PARTICLES**

(30) Priority: 30.12.2015 CL 94 201503
(71) Applicant: Universidad de Chile, 8330111 Santiago (CL)
(72) Inventor: LOZANO ZARTO, Harold Ivan, Santiago 7800003 (CL); BENAVENTE ESPINOSA, Eglantina Javiera, Santiago 7800002 (CL); MENDIZABAL EMALDIA, Fernando Javier, Santiago 7800003 (CL); GONZALEZ MORAGA, Guillermo Antonio Alberto, Santiago 7800003 (CL)
(74) Representative: Carvajal y Urquijo, Isabel
(86) International application number: PCT/IB2016/058110
(87) International publication number: WO 2017/115330

(57) **Abstract**

The invention relates to copper nanoparticles and to a method for producing same, comprising the following steps: dissolving at least one copper salt, oxide or hydroxide in distilled water in a recipient; dissolving at least one stabiliser in distilled water in a recipient; mixing the two solutions in a reactor; adding a primary complexing agent; adding an alkali; adding an antifoaming agent; adding at least one reducing agent, stopping the reaction by cooling to a reaction temperature of between 0°C and 25°C while maintaining the stirring; adding at least one antioxidant; adding at least one secondary complexing agent; and maturing and washing the mixture. The invention also relates to the use of copper nanoparticles.

## Description

### FIELD OF THE INVENTION

The present invention relates to a process for obtaining copper nanoparticles (NPs), specifically with a size between 10 nm and 200 nm. In particular, the present invention relates to a method for obtaining said copper nanoparticles that uses low amounts of stabilizers, antioxidants and counter-ion of the copper salt, generating a maturation towards non-spherical morphologies of the NPs that finally present optical properties such as birefringence.

Specifically, a method is described for the manufacture of metallic NPs with angular dependence in the transmission of light, in water and in the open atmosphere, which produces suspensions with a high charge of particles resistant to premature oxidation.

### STATE OF ART

Within the existing bibliography, several methods that produce copper NPs nanoparticles are described. Among them, the best known are the polyol method, the hydrothermal treatment, the synthesis in two phases, in a single apolar phase, and the synthesis in aqueous phase.

In the case of the patent application US20100172997A, dated December 30, 2008, a composition of metallic nanoparticles is described, its method of manufacture and use thereof, by converting a metal (1) to a metal (O) and to form one or more metallic nanoparticles of metal (O). One or more metallic nanoparticles are stabilized with one or more biocompatible stabilizers (Chitosan) to prevent agglomeration and make them susceptible for biomedical applications.

In the international patent application WO2010010569A, dated July 24, 2008, reference is made to a process that comprises the preparation of metallic nanoparticles (copper, gold, silver, platinum, zinc, magnesium, titanium or alloys) in the presence of a stabilizing agent (chitosan, trisodium citrate), in which the stabilizing agent is added together with the reducing agent (trisodium citrate dihydrate, ascorbic acid, tyrosine, hydrazine) and the addition of the metallic nanoparticles to the rice husk ash to obtain rice husk ash with metallic nanoparticles attached.

In the patent application US 2010269635 describes processes for the production of metallic nanoparticles. In one aspect, the invention is a process comprising the steps of mixing a first heated solution comprising a base and/or a reducing agent (eg, a non-polyol reducing agent), a polyol and a vinylpyrrolidone polymer with a second solution comprising a metal precursor that is capable of being reduced to a metal by the polyol. In another aspect, the invention is a process that includes the steps of heating a powder of a vinylpyrrolidone polymer; forming a first solution comprising the powder and a polyol; and mixing the first solution with a second solution comprising a metal precursor capable of being reduced to a metal by the polyol.

In the methods described in the state of the art that use an aqueous medium, it is observed that all of them use copper salts I and II mostly. Although some involve the use of poly (vinylpyrrolidone) (PVP) as a stabilizer, none makes use of polyamosaccharides as a stabilizer or protector to oxidation. In general, these methods work with concentrations of 2, 5, 10 and up to 100 times lower than the concentrations used in the method of the present application, which forces to use extractions with organic solvents.

As can be seen in the state of the art, those methods that work with polymeric protectors (poly (vinylpyrrolidone) PVP) must do it under an inert atmosphere. These specific conditions increase the cost of preparing the nanoparticles and make the application of the method more difficult.

In the same way, the range of pH > 5, preferably a pH between 5 and 12.5; of the present invention is greater than those reported in the state of the art. This offers a greater versatility in the regulation of the parameters of the synthesis and a greater chemical stability of the nanoparticles in moderately acidic or basic media.

The method for obtaining copper nanoparticles (NPs) stable under environmental conditions through environmentally benign processes, succeeds in replacing gold or silver nanoparticles (NPs) with metallic NPs with similar properties but at a lower cost for use in commercial applications.

Among these commercial applications we find wiring, encapsulation, and electrical connections in electronics and microelectronics; high performance transparent conductors for touch screens, capacitive sensors, shielding against electromagnetic interference and use of NPs or composites as bactericides for environmental protection, textiles and clothing, food, or the manufacture of household appliances with a coating based on this type of materials.

### DESCRIPTION OF THE FIGURES

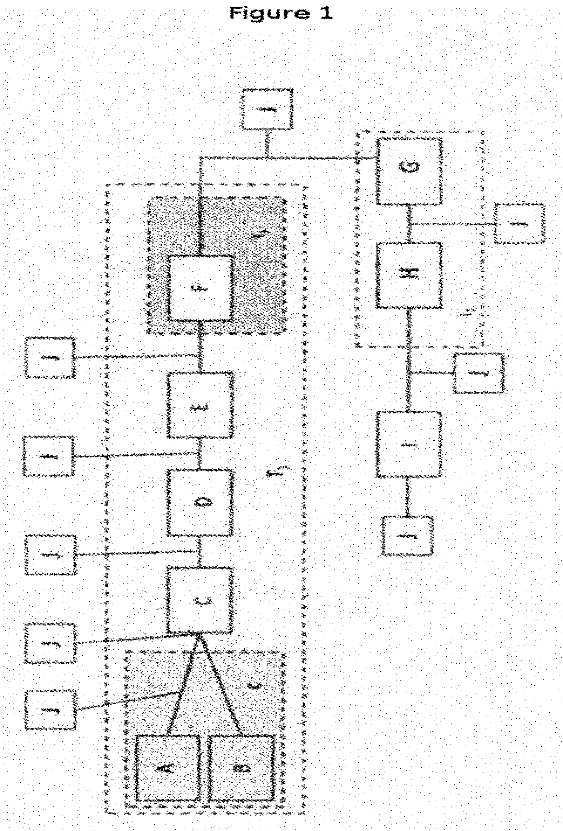

Figure 1 shows the general scheme of the method for obtaining copper nanoparticles of the present invention.

A: Salt or Copper Oxide; B: Molecule or stabilizing polymer; C: Primary Complexing; D: alkali to adjust pH; E: Antifoam; F: Reducer; G: Antioxidant; H: Secondary complexing; 1: Cleaning and/or purification of nanoparticles with water, ethanol, etc .; J: Secondary polymer or modifying molecule; and synthesis conditions (e, T" t, Y t2).

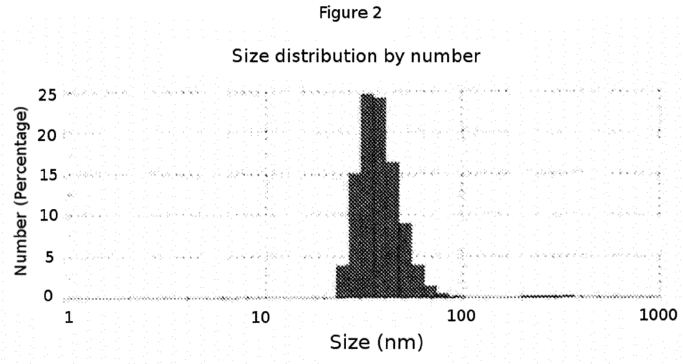

Figure 2 shows the size distribution (number of particles determined by DLS analysis) of the metallic copper nanoparticles obtained according to example 1.

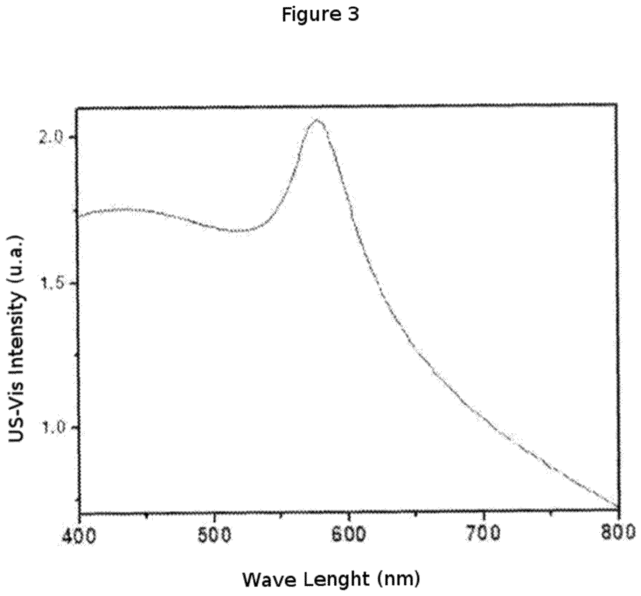

Figure 3, shows the UV-Vis Spectrum of the sample obtained according to Example 1. The maximum absorption by Plasmon resonance is between 573 nm and 578 nm.

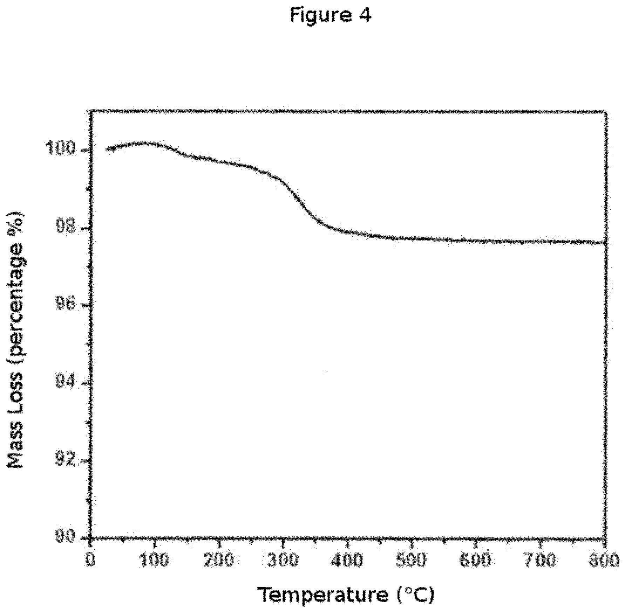

Figure 4, shows a Thermogram of mass loss (TG) by progressive heating up to 800°C in N₂ of the nanoparticles according to example 1.

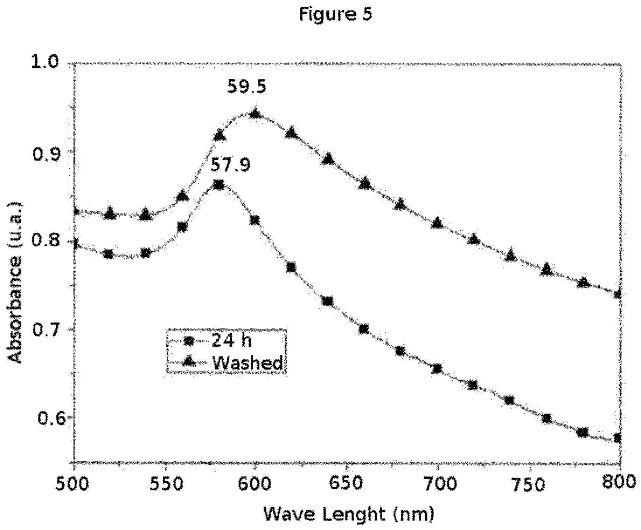

Figure 5 shows UV-Vis spectra of the sample obtained according to example 2. The maximum absorption by resonance Plasmon between 579 nm (24 h after completing the synthesis) and 595 nm (washed after 3 days).

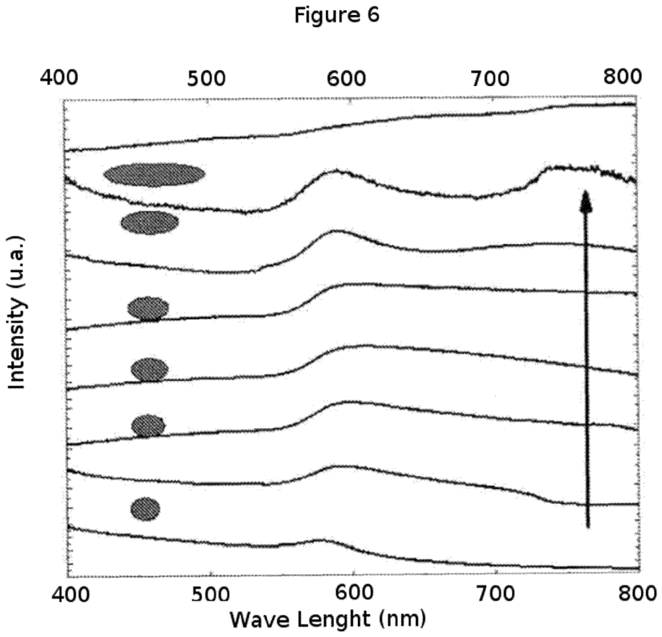

Figure 6 shows the UV-Vis Spectra of the sample obtained according to the method of Example 3. In the first growth phase, a Resonance Plasmon is presented at 580 nm, in the second phase a second Plasmon appears near 700 nm, when anisotropic growth begins. The third phase clearly shows the presence of the two plasmons with the same intensity. After the maturation process the second Plasmon increases its intensity inducing a change of shape of the spectrum.

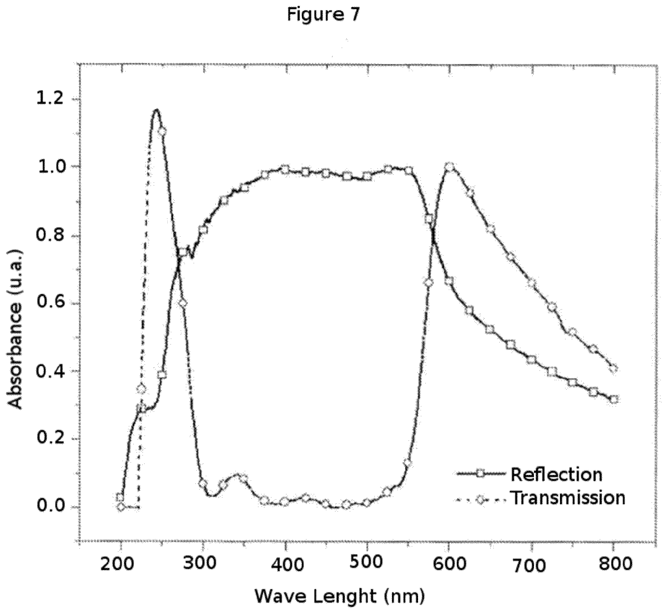

Figure 7 shows the UV-Vis spectra of the sample obtained according to the method of the present invention (example 4), showing an example of the optical properties of the nanoparticles by anisotropic growth. The continuous line with squares is the spectrum taken by diffuse reflectance and the dashed line with circles is the spectrum taken by transmission (absorption spectrum). The change in profile indicates that there are differences in the way in which nanoparticles interact with light (transmitted and/or reflected form).

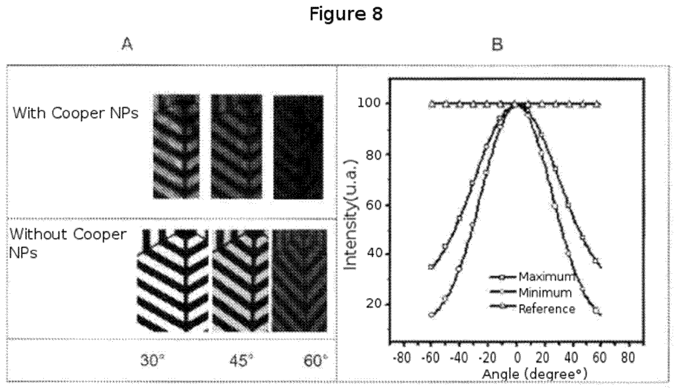

Figure 8 shows the application of the new particles with optical properties obtained with the invention. The polymeric membranes with copper nanoparticles present dependence between the intensity and contrast of the light transmitted with the angle of observation. Figure A on the left shows the photos of the membranes at three observation angles (30°, 45° and 60°). Figure B on the right shows the profiles of the membrane with and without nanoparticles with respect to the reference value without membrane.

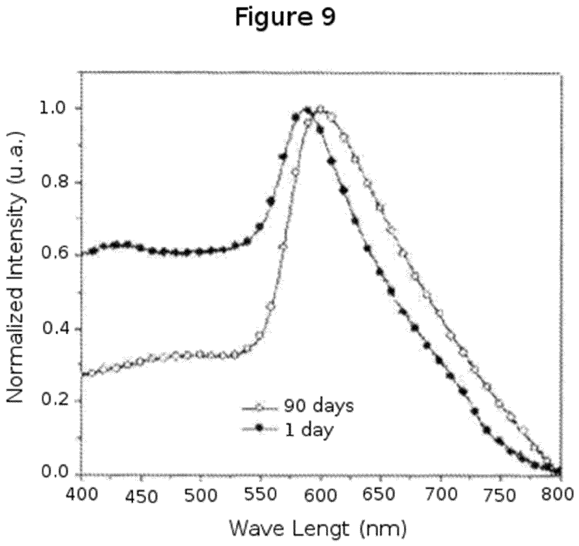

Figure 9 shows the UV-Vis Spectrum of the sample obtained according to the method of the present invention (example 2). In this figure the UV-Vis absorption spectra of a sample are compared with 1 day after the synthesis and after 90 days of storage with a low content of O₂. The maximum absorption by resonance Plasmon changed from 587nm to 600nm. There is no presence of oxidized copper (Cu²⁺).

### DETAILED DESCRIPTION OF THE INVENTION

The method for obtaining stable copper nanoparticles and under benign environmental conditions, comprises the following stages:
i) Dissolve in a container at least one salt, oxide or copper hydroxide in distilled water until a molar concentration of 0.1 to 1.5 M is reached, wherein the copper salt is selected from copper (I) chloride (CuCI), Copper (II) Chloride (CuCl₂), Copper (I) Cyanide (CuCN), Copper Sulfate (CuSO₄), Copper Nitrate (Cu(NO₃)₂), Copper Acetate (CH₃COO)₂Cu, Copper carbonate (CuCO₃), copper acetylacetonate C₅H₇CuO₂, copper (II) perchlorate Cu(ClCO₄)₂, copper (II) stearate, copper (II) ethylenediamine, copper (II) trifluoroacetylacetonate, copper hexafluoroacetylacetonate (II), copper formate (II), copper methacrylate (II), copper neodecanoate (II), copper ethylhexanoate (II), copper trifluoroacetate (II), and other copper sources such as copper oxide (I) (Cu₂O), Copper (II) oxide (CuO), copper (II) hydroxide (CuOH)₂.
ii) Dissolve in a container at least one stabilizer in distilled water until reaching a molar concentration of 0.5 to 20 M, wherein the stabilizer is selected from polymers: poly (vinylpyrrolidone) (PVP), polyvinyl alcohol, polycarbonates, polyphenols, polyethylene glycol and polyols such as ethylene glycol, diethylene glycol, tri-ethylene glycol, propylene glycols, alkyldiols such as butanediols, dipropylene glycol and polyethylene glycols, chitosan and its derivatives, polyacids and derivatives thereof, mercaptoalkanoates, and oxybenzoic acids. Here, the polyacids including any one or more of those selected from a group of poly (acrylic acid), poly (maleic acid), poly (methyl methacrylate), poly (acrylic acid - co-methacrylic acid), poly (maleic acid) acrylic acid), and poly (acrylamide-coacrylic acid), cellulose acetates, polyvinylacetates, polysulfone, polyphenylsulphones, polyethersulfones, polyketones, polyetherketones, polyesters, polyacetates, polymers and copolymers of two or more of these and the derivatives including, among others, or more than those selected from a group of ammonium, sodium or potassium salts of the polyacids, but not limited thereto.
iii) Mix the two solutions prepared in step i) and ii) in a reactor, with stirring in the range of 5 to 10,000 rpm for a homogenization time between 1 min and 24 hours.
iv) Add to the reaction mixture of step iii) a primary complexing agent in a 5 to 12 M molar concentration with stirring in the range of 5 to 10,000 rpm for a time between 1 min and 24 hours, wherein the primary complexing agent is selected from ammonia (NH₃), ammonium hydroxide, primary and secondary amines: isopropylamine, butylamine, pentylamine, hexylamine, heptylamine, octylamine, nonilamine, decylamine, undecylamine, dodecylamine, tridecylamine, tetradecylamine, pentadecylamine, hexadecylamine, heptadecylamine, octadecylamine, diethylamine, dipropylamine, dibutylamine, dipentylamine, dihexylamine, diheptylamine, dioctylamine, in addition, terbutylamine, aniline, or any Schiff bases, but not limited thereto.
v) Add an alkali to the reaction mixture of step iv), until the mixture is adjusted to a pH > 5, preferably a pH between 5 and 12.5; wherein the alkali is selected from sodium hydroxide (NaOH), potassium hydroxide (KOH), lithium hydroxide (LiOH), magnesium hydroxide (Mg(OH)₂), barium hydroxide (Ba(OH)₂), calcium hydroxide (Ca(OH)₂) including Arrhenius bases.
vi) Add defoamer to the reaction mixture of step v) in a concentration not greater than 1% of the total mixture and heat the reaction mixture between 25-120°C with stirring in the range of 5 to 10,000 rpm; wherein the defoamer is selected from high molar alcohols such as hexanol, 1-heptanol, 1-octanol, 1-nonanol, 1-decanol, 1-undecanol, 1-dodecanol, 1-tridecanol, 1-tetradecanol, 1-pentadecanol, 1-hexadecanol, 1-heptadecanol, 1-octadecanol and any of these with branches in its main chain. In addition, aromatics alcohols and any defoamers are selected for water-based systems such as defoamers based on polysiloxanes, based on mineral oil, based on vegetable oil, and based on polymers, but not limited thereto.
vii) Adding at least one reducer to the stirring reaction mixture in the range of between 5 to 10,000 rpm of step vi) which is in a molar concentration of 0.5 to 3 M and maintain stirring in the range of 5 to 10,000 rpm of the reaction mixture for a time between 1 min and 24 hours of reduction; wherein the reducer is selected from hydrazine monohydrate and derivatives, hydroxylamine and its derivatives, monohydric alcohols such as methanol, ethanol, aldehydes such as formaldehyde, ammonium formate, acetaldehyde and propane aldehyde or salts thereof, hypophosphites, sulfites, tetrahydroborates, tetraaluminohydride lithium (LiAlH₄), sodium borohydride, polyhydroxybenzene such as hydroquinone and its derivatives, phenylenediamines and their derivatives, aminophenols and their derivatives, carboxylic acids and their derivatives such as ascorbic acid, citric acid, but not limited thereto.
viii) Stop the reaction of step vii) by cooling to a reaction temperature of between 0°C-25°C maintaining the stirring in the range of 5 to 10,000 rpm.
ix) Adding at least one antioxidant pre-dissolved in distilled water with a molar concentration of 0.5 to 3 M in the reaction mixture of step viii), wherein the antioxidant is selected from carboxylic acids and its derivatives as ascorbic acid, citric acid, hydrazine monohydrate and derivatives, hydroxylamine and its derivatives, monohydric alcohols such as methanol, ethanol, aldehydes such as formaldehyde, ammonium formate, acetaldehyde and propane aldehyde or salts thereof, hypophosphites and similar antioxidant agents.
x) Adding at least one secondary complexer pre-dissolved in distilled water in a 0.1 to 1.5 M molar concentration to the reaction mixture of step ix), wherein the secondary complexer is selected from carboxylic acids and their derivatives, dicarboxylic acids, unsaturated carboxylic acids, ammonia (NH₃), ammonium hydroxide, primary and secondary amines. The carboxylic acids and their derivatives are selected from the group of ascorbic acid, citric acid, aliphatic and aromatic carboxylic acids, such as benzoic acid, phenylacetic acid but not limited thereto. In addition to the following dicarboxylic acids: ethanedioic acid, propanedioic acid, butanedioic acid, pentanedioic acid, hexanedioic acid, heptanedioic acid, octanedioic acid, nonadioic acid, decadioic acid, butenediic acid, phthalic acid, 2,4-diphenylcyclobutan-1,3-dicarboxylic acid, 3,4-diphenylcyclobutan-1,2-dicarboxylic acid, but not limited thereto. Also the secondary complexing agent can be selected from unsaturated carboxylic acids: acrylic, crotonic, isocrotonic, sorbic, palmitoleic, sapienic, oleic, elaidic, vaccenic, linoleic, linoelaidic, citric acid, tartaric acid, cinnamic acid, not limited thereto. Also, the primary and secondary amines are selected from: isopropylamine, butylamine, pentylamine, hexylamine, heptylamine, octylamine, but not limited thereto.
xi) Maturing the mixture of step x) for a time of 1 min to 15 days, at a temperature of 10°C to 70°C with and/or without stirring in the range of 5 to 10,000 rpm.
xii) Wash the nanoparticles by centrifugation and/or dialysis with at least one solvent selected from water, preferably deionized, monoprotic solvents such as methanol, ethanol, isopropanol, acetone, or a mixture thereof, but not limited thereto.

Finally, alternatively it is possible to add a secondary polymer or a modifying molecule in any of steps i), iii), iv), v), vi), vii), x), xi) and xii), wherein the secondary polymer is selected from the group of polymers such as poly (vinylpyrrolidone) (PVP), polyvinyl alcohol, polycarbonates, polyphenols, polyethylene glycol and polyols such as ethylene glycol, diethylene glycol, tri-ethylene glycol, propylene glycols, alkyldiols such as butanediols, dipropylene glycol and polyethylene glycols, chitosan and its derivatives, polyacids and derivatives thereof, mercaptoalkanoates, and oxybenzoic acids; wherein the polyacids include one or more of those selected from the group of poly (acrylic acid), poly (maleic acid), poly (methyl methacrylate), poly (acrylic acid-co-methacrylic acid), poly (maleic acid-co-acrylic acid), and poly (acrylamide-coacrylic acid), cellulose acetates, polyvinylacetates, polysulfones, polyphenylsulphones, polyethersulfones, polyketones, polyetherketones, polyesters and their derivatives, including one or more of those selected from the group of ammonium, sodium or potassium of the polyacids, inorganic polymers type phosphazenes and wherein a modifying molecule is selected from the group of aliphatic and/or aromatic molecules, with 2 or more carbon atoms, which may include oxygen, nitrogen, sulfur, phosphorus or mixture thereof, with one or more functional groups, which can also be organometallic complexes, clusters or mixture of atoms, homo- and heteronuclear functional groups, and molecules with chemical and physical defined properties, not limited thereto.

With this method spherical nanoparticles of sizes between 10 nm and 200 nm are obtained, wherein the size of the nanoparticles can be regulated by varying the molar ratio between the copper salt and the polymeric stabilizer. In addition, they show a UV-Vis spectrum with a plasmon that moves from 579 nm to 595 nm.

With these nanoparticles obtained from the method described above, polymer membranes were prepared in a matrix based on chitosan and another depolymethyl methacrylate (PMMA) by the gel-casting method with nanoparticle contents of up to 15%, based on the matrix.

The present method for obtaining results in copper nanoparticles with a maturation to non-spherical morphologies of copper NPs that present variations in the interaction with light, both in the transmittance and in the reflectance of the same.

### EXAMPLES OF APPLICATION

### EXAMPLE 1.

Example of obtaining copper nanoparticles of size 40 nm.

Two previously prepared solutions are mixed: one by the solution of 0.9983 g of the copper salt (CH₃COO)₂Cu in 20 mL of distilled water and the other by the solution of 5.550 g of PVP (40 kDa) as polymeric stabilizer in 20 mL of distilled water, for 30 min with stirring in the range of 5 to 10,000 rpm. To the mixture is added 3.0 mL of NH₃. The mixture is stirred for 30 min. It is added 0.050 g of NaOH to the above mixture, to adjust the pH to a value greater than 10.5. It is added 0.01 mL of the defoamer 1-octanol to the reaction mixture, and the reaction mixture is heated at 95°C with stirring in the range of 5 to 10,000 rpm. When the temperature is reached, it is added 0.8495 mL of hydrazine monohydrate and the mixture is allowed to react for 60 min with stirring in the range of 5 to 10,000 rpm. At the end of that time the reaction is stopped by cooling to 25°C of temperature but with stirring in the range of 5 to 10,000 rpm.

Then, 0.8806 g of pre-dissolved ascorbic acid is added in 5 mL of distilled water together with 1.4705 g of pre-dissolved sodium citrate in 5 mL of distilled water.

The mixture is allowed to mature for 2 hours at a temperature of 25°C with stirring in the range of 5 to 10,000 rpm and then it is allowed to mature 1 day at a temperature of 60°C without stirring in the range of 5 to 10,000 rpm. The obtained nanoparticles are washed with ethanol by dialysis.

In figures 2, 3, and 4, the results of the characterization analyzes of the nanoparticles are shown.

Figure 2 shows the size distribution (by number, according to DLS analysis) of the metallic copper nanoparticles. A homogeneous distribution of 40 nm nanoparticles is presented.

The UV-Vis Spectrum (Figure 3) showed a maximum absorption by resonance Plasmon between 573 nm and 578 nm indicating a nanometric size and that was confirmed by TEM.

Figure 4 shows that the residual stabilizer in the nanoparticles after cleaning them is not higher than 6%.

### EXAMPLE 2

Example of obtaining copper nanoparticles of size 60 nm.

Two previously prepared solutions are mixed: one by dissolving 4.9913 g of (CH₃COO)₂Cu in 100 mL of distilled water and the other by dissolving 13.8750 g of PVP (140 kD) in 100 mL of distilled water; with 30 min of stirring in the range of 5 to 10,000 rpm. It is added 14.95 mL of NH₃ to the mixture as a complexing agent. The mixture is stirred for 30 min. It is added 10 mL of 5M NaOH to the above mixture, to adjust the pH to a value greater than 10.5. It is added 0.1 mL of the defoamer (1-octanol) to the reaction mixture, and the reaction mixture is heated to 85°C with stirring in the range of 5 to 10,000 rpm. Upon reaching the temperature, 4.2473 mL of hydrazine monohydrate is added and the mixture is allowed to react for 60 min with stirring in the range of 5 to 10,000 rpm. At the end of this time the reaction is stopped by cooling to 21°C of temperature but with stirring in the range of 5 to 10,000 rpm. It is added 4.4030 g of pre-dissolved ascorbic acid in 12.5 mL of distilled water together with 7.3525 g of pre-dissolved sodium citrate in 12.5 mL of distilled water.

The mixture is allowed to mature for 2 hours at a temperature of 25°C with stirring in the range of 5 to 10,000 rpm and then it is left to mature for 2 days at a temperature of 25°C without stirring, in the range of 5 to 10,000 rpm. The nanoparticles thus obtained are washed by dialysis with deionized water.

In figure 5 the UV-Vis spectrum of a sample of this example is shown after being synthesized (24 hours) in comparison with that obtained for the nanoparticles after washing them after 3 days. The Plasmon moves from 579 nm to 595 nm evidencing that there is no excessive growth of nanoparticles.

### EXAMPLE 3

Example of obtaining copper nanoparticles of size 100 nm, wherein the optical properties of them are shown.

Two previously prepared solutions are mixed: one by dissolving 4.9913 g of (CH₃COO)₂Cu in 100 mL of distilled water and the other by dissolving 13.8750 g of PVP (140 kD) in 100 mL of distilled water; with 30 min of stirring in the range of 5 to 10,000 rpm. It is added 14.95 mL of NH₃ to the mixture as a complexing agent. The mixture is stirred for 30 min. It is added 10 mL of 5M NaOH to the above mixture, to adjust the pH to a value greater than 10.5. It is added 0.1 mL of the defoamer (1-octanol) to the reaction mixture, and the reaction mixture is heated to 80°C with stirring in the range of 5 to 10,000 rpm. Upon reaching the temperature, 4.2473 mL of hydrazine monohydrate is added and the mixture is allowed to react for 60 min with stirring in the range of 5 to 10,000 rpm. At the end of this time the reaction is stopped by cooling to 20°C of temperature but with stirring in the range of 5 to 10,000 rpm. It is added 4.4030 g of pre-dissolved ascorbic acid in 12.5 mL of distilled water together with 7.3525 g of pre-dissolved sodium citrate in 12.5 mL of distilled water.

The mixture is allowed to mature for 2 hours at a temperature of 25°C with stirring in the range of 5 to 10,000 rpm and then it is allowed to mature 15 days at a temperature of 25°C without stirring in the range of 5 to 10,000 rpm. The nanoparticles thus obtained are washed by dialysis with deionized water.

In Figure 6, the UV-Vis Spectra of a sample of nanoparticles at different stages of maturation and/or growth are shown. In the first phase of growth, a Resonance Plasmon is presented at 580 nm, in the second phase a second plasmon appears near 700 nm when anisotropic growth begins. The third phase clearly shows the presence of the two plasmons with the same intensity, after this, the maturation finally causes the second plasmon to increase its intensity causing the spectrum to change the shape

### EXAMPLE 4

Example of copper nanoparticles with a size of 150 nm with optical properties.

Two previously prepared solutions are mixed: one by dissolving 9.9825 g of (CH₃COO)₂Cu in 200 mL of distilled water and the other by dissolving 55.5000 g of PVP (140 kD) in 200 mL of distilled water; with 30 min of stirring in the range of 5 to 10,000 rpm. It is added 30 mL of NH₃ to the mixture as complexing agent. The mixture is stirred for 30 min. It is added 20 mL of 5M NaOH to the above mixture, to adjust the pH to a value greater than 10.5. It is added 0.3 mL of the defoamer (1-octanol) to the reaction mixture, and the reaction mixture is heated to 70°C with stirring in the range of 5 to 10,000 rpm. Upon reaching the temperature, 4.2473 mL of hydrazine monohydrate is added and the mixture is allowed to react for 60 min with stirring in the range of 5 to 10,000 rpm. At the end of this time the reaction is stopped by cooling to 18°C of temperature but with stirring in the range of 5 to 10,000 rpm. It is added 8.8060 g of pre-dissolved ascorbic acid in 50.0 mL of distilled water together with 14.7050 g of pre-dissolved sodium citrate in 50.0 mL of distilled water. The mixture is allowed to mature for 24 hours at a temperature of 60°C with stirring in the range of 5 to 10,000 rpm and then allowed to mature for 15 days at a temperature of 25°C without stirring in the range of 5 to 10,000 rpm. The nanoparticles thus obtained are washed by dialysis.

With the nanoparticles obtained in Example 4, then it is prepared two polymer membranes, one matrix based on chitosan and another based on polymethylmethacrylate (PMMA) by the gel-casting method with nanoparticle contents of up to 15% of the base matrix. The membranes showed a different color when observed with different lighting angles. To evaluate this effect, the absorption spectrum of UV-visible light was measured by two methods, one by means of the measurement with diffuse reflectance (reflected light) and another one of absorption (transmitted light).

Figure 7 shows the results of this analysis of the optical properties of nanoparticles due to anisotropic growth. The continuous line with squares is the spectrum taken by diffuse reflectance and the dashed line with circles is the spectrum taken by transmission (absorption spectrum). The change in profile indicates that there are differences in the form in which nanoparticles interact with light (transmitted and/or reflected form). This type of behavior of the nanoparticles against light, is obtainable only by the method of the invention, together with the high stability and the production in aqueous medium and with open atmosphere constitutes great advantages over the other methods known in the state of the art for the application of copper nanoparticles in wiring, encapsulation, and electrical connections in electronics and microelectronics; high performance transparent conductors for touch screens, capacitive sensors, shielding against electromagnetic interference and use of NPs or composites thereof as bactericides for environmental protection, textiles and clothing, food, or the manufacture of household appliances with coating based on this type of materials.

## Claims

1. A method for obtaining copper nanoparticles, wherein it comprises the following stages:
i) dissolving in a container at least one copper salt, oxide or hydroxide in water, preferably distilled water, until a solution of a concentration of 0.1 M to 1.5 M is obtained;
ii) dissolving in a container at least one stabilizer in water, preferably distilled, until a stabilizer solution of a concentration of 0.5 to 20 M is obtained;
iii) mixing the two solutions in a reactor and maintaining with stirring in the range of between 5 to 10,000 rpm for a time between 1 min and 24 hours;
iv) adding to the reaction mixture obtained in step iii) at least one primary complexing agent in a molar concentration from 5 to 12 M, stirring the complexing reaction mixture for a time between 1 min and 24 hours;
v) adding an alkali to the above reaction mixture, until the mixture is adjusted to a pH > 5;
vi) then adding a defoamer to the reaction mixture in a concentration not greater than 1% of the total mixture and heating the reaction mixture between 25-120°C with stirring in the range of between 5 to 10,000 rpm;
vii) adding at least one reducer to the reaction mixture of step vi) with stirring in the range of 5 to 10,000 rpm which is in a molar concentration from 0.5 to 3 M; stirring the reaction mixture for a time between 1 min and 24 hours of reduction;
viii) stopping the reaction by cooling to a reaction temperature between 0°C to 25°C while maintaining stirring in the range of 5 to 10,000 rpm;
ix) adding at least one antioxidant pre-dissolved in distilled water with a molar concentration from 0.5 to 3 M;
x) adding at least one secondary complexer pre-dissolved in distilled water in a molar concentration of 0.1 to 1.5 M;
xi) maturing the mixture of step x) for a time of 1 min to 15 days, at a temperature of 10°C to 70°C with or without stirring in the range of 5 to 10,000 rpm;
xii) washing the nanoparticles by centrifugation and/or dialysis with at least one solvent.

2. The method for obtaining copper nanoparticles according to claim 1, wherein the copper salt, oxide or hydroxide of stage i) is selected from the group consisting of copper (I) chloride (CuCI), Copper (II) Chloride (CuCl₂), copper (I) cyanide (CuCN), copper sulfate (CuSO₄), copper nitrate (Cu(NO₃)₂, copper acetate (CH₃COO)₂Cu, copper carbonate (CuCO₃), copper acetylacetonate C₅H₇CuO₂, copper (II) perchlorate, copper (II) stearate, copper (II) ethylenediamine, copper (II) trifluoroacetylacetonate, copper (II) hexafluoroacetylacetonate, copper (II) formate, copper (II) methacrylate, copper (II) neodecanoate, copper (II) ethylhexanoate, copper (II) trifluoroacetate, copper (I) oxide (Cu₂O), copper (II) oxide (CuO), copper (II) hydroxide (CuOH)₂.

3. The method for obtaining copper nanoparticles according to claims 1 to 2, wherein the stabilizer of step ii) is selected from the group consisting of polymers such as poly (vinylpyrrolidone) (PVP), polyvinyl alcohol, polycarbonates, polyphenols, polyethylene glycol and polyols such as ethylene glycol, diethylene glycol, tri-ethylene glycol, propylene glycols, alkyldiols such as butanediols, dipropylene glycol and polyethylene glycols, chitosan and its derivatives, polyacids and derivatives thereof, mercaptoalkanoates, and oxybenzoic acids; wherein the polyacids include one or more of those selected from the group of poly (acrylic acid), poly (maleic acid), poly (methyl methacrylate), poly (acrylic acid-co-methacrylic acid), poly (maleic acid-co-acrylic acid), and poly (acrylamide-coacrylic acid), cellulose acetates, polyvinylacetates, polysulfones, polyphenylsulphones, polyethersulfones, polyketones, polyetherketones, polyesters and their derivatives, including one or more of those selected from the group of ammonium, sodium or potassium salts of the polyacids.

4. The method for obtaining copper nanoparticles according to claims 1 to 3, wherein the primary complexing agent of step iv) is selected from the group consisting of ammonia (NH₃), ammonium hydroxide and the group of primary amines and secondary agents such as isopropylamine, butylamine, pentylamine, hexylamine, heptylamine, octylamine, nonylamine, decylamine, undecylamine, dodecylamine, tridecylamine, tetradecylamine, pentadecylamine, hexadecylamine, heptadecylamine, octadecylamine, diethylamine, dipropylamine, dibutylamine, dipentylamine, dihexylamine, diheptylamine, dioctylamine, terbutylamine, aniline or Schiff bases.

5. The method for obtaining copper nanoparticles according to claims 1 to 4, wherein the alkali of step v) is selected from sodium hydroxide (NaOH), potassium hydroxide (KOH), lithium hydroxide (LiOH), magnesium hydroxide (Mg(OH)₂), barium (Ba(OH)₂), calcium (Ca(OH)₂) and Arrhenius bases.

6. The method for obtaining copper nanoparticles according to claims 1 to 5, wherein the defoamer of step vi) is selected from high molar weight alcohols such as hexanol, heptanol, octanol, nonanol, decanol, undecanol, dodecanol, tridecanol, tetradecanol, pentadecanol, hexadecanol, heptadecanol, octadecanol and its branched derivatives; wherein also the defoamer is selected from aromatic alcohols, and any defoamer for water-based systems such as defoamers based on polysiloxanes, based on mineral oil, based on vegetable oil, and based on polymers.

7. The method for obtaining copper nanoparticles according to claims 1 to 6, wherein the reducer of step vii) is selected from hydrazine monohydrate and its derivatives; hydroxylamine and its derivatives; monohydric alcohols such as methanol, ethanol; aldehydes such as formaldehyde, ammonium formate, acetaldehyde and propane aldehyde or salts thereof; hypophosphites, sulfites, tetrahydroborates, lithium tetraaluminohydride (LiAlH₄), sodium borohydride, polyhydroxybenzene such as hydroquinone and its derivatives, phenylenediamines and their derivatives, aminophenols and their derivatives, carboxylic acids and their derivatives such as ascorbic acid and citric acid.

8. The method for obtaining copper nanoparticles according to claims 1 to 7, wherein the antioxidant of step ix) is selected from carboxylic acids and their derivatives such as ascorbic acid, citric acid, hydrazine monohydrate and derivatives, hydroxylamine and its derivatives, monohydric alcohols such as methanol, ethanol, aldehydes such as formaldehyde, ammonium formate, acetaldehyde and propanoaldehyde or salts thereof, hypophosphites.

9. The method for obtaining copper nanoparticles according to claims 1 to 8, wherein the secondary complexer x) is selected from carboxylic acids and their derivatives, dicarboxylic acids, unsaturated carboxylic acids, ammonia (NH₃), hydroxide ammonium, primary and secondary amines.

10. The method for obtaining copper nanoparticles according to claim 9, wherein the carboxylic acids and their derivatives are selected from ascorbic acid, citric acid, aliphatic and aromatic carboxylic acids.

11. The method for obtaining copper nanoparticles according to claim 10, wherein the aliphatic and aromatic carboxylic acids are selected from benzoic acid and phenylacetic acid.

12. The method for obtaining copper nanoparticles according to claim 9, wherein the dicarboxylic acids are selected from ethanedioic acid, propanedioic acid, butanedioic acid, pentanedioic acid, hexanedioic acid, heptanedioic acid, octanedioic acid, nonadioic acid, decadioic acid, butenodioic acid, phthalic acid, 2,4-diphenylcyclobutan-1,3-dicarboxylic acid, 3,4-diphenylcyclobutane-1,2-dicarboxylic acid.

13. The method for obtaining copper nanoparticles according to claim 9, wherein the primary and secondary amines are selected from isopropylamine, butylamine, pentylamine, hexylamine, heptylamine and octylamine.

14. The method for obtaining copper nanoparticles according to claims 1 to 13, wherein the solvent of step xii) is selected from water, preferably deionized, and monoprotic solvents such as methanol, ethanol, isopropanol, acetone.

15. The method for obtaining copper nanoparticles according to claim 1, wherein in step v) the pH must be adjusted to a value between 5 and 12.5.

16. The method for obtaining copper nanoparticles according to claim 1, wherein a secondary polymer or a modifying molecule is added in any of the steps i), iii), iv), v), vi), vii), x), xi) and xii), wherein the secondary polymer is selected from the group of polymers such as poly (vinylpyrrolidone) (PVP), polyvinyl alcohol, polycarbonates, polyphenols, polyethylene glycol and polyols such as ethylene glycol, diethylene glycol, tri-ethylene glycol, propylene glycols, alkyldiols such as butanediols, dipropylene glycol and polyethylene glycols, chitosan and its derivatives, polyacids and derivatives thereof, mercaptoalkanoates, and oxybenzoic acids; wherein the polyacids include one or more of those selected from the group of poly (acrylic acid), poly (maleic acid), poly (methyl methacrylate),poly (acrylic acid-co-methacrylic acid), poly (maleic acid-co-acrylic acid), and poly (acrylamide-coacrylic acid), cellulose acetates, polyvinylacetates, polysulfones, polyphenylsulphones, potassium sulfones, polyketones, polyetherketones, polyesters and their derivatives, including one or more of those selected from the group of ammonium, sodium or potassium salts of the polyacids and inorganic polymers of the phosphazene type and wherein a modifying molecule is selected from the group of aliphatic and/or aromatic molecules, with 2 or more carbon atoms, which may include oxygen, nitrogen, sulfur, phosphorus or mixture thereof, with one or more functional groups, which may also be organometallic complexes, clusters or mixtures of atoms, homo- and heteronuclear functional groups.

17. Copper nanoparticles obtained according to the method described in claims 1 to 16, wherein they comprise a size between 10 nm and 200 nm, and show a UV-Vis spectrum with a plasmon moving from 579 nm to 595 nm.

18. Use of the copper nanoparticles obtained according to the method described in claims 1 to 16, wherein it serves to prepare polymer membranes.
